# EUROPEAN PATENT APPLICATION

(11) **EP 3 076 629 A1**
(43) Date of publication of application: **05.10.2016**
(21) Application number: 14865849.5
(22) Date of filing: 17.09.2014
(51) Int. Cl.: H04L 29/06

(54) **METHOD AND DEVICE FOR MEDIA MULTIPLEXING NEGOTIATION**

(30) Priority: 27.11.2013 CN 201310636386
(71) Applicant: Huawei Technologies Co., Ltd., Longgang District Shenzhen, Guangdong 518129 (CN)
(72) Inventor: WEI, Haitao, Shenzhen Guangdong 518129 (CN); REN, Jungang, Shenzhen Guangdong 518129 (CN)
(74) Representative: Isarpatent
(86) International application number: PCT/CN2014/086689
(87) International publication number: WO 2015/078220

(57) **Abstract**

Provided are a method and device for media multiplexing negotiation. The method comprises: sending a negotiation request message to a response end, the negotiation request message comprising information about n media types; and receiving a negotiation response message sent by the response end, the negotiation response message being used for indicating m multiplexing relationships, each multiplexing relationship of the m multiplexing relationships corresponding to at least one media type of the n media types, and each multiplexing relationship being used for indicating at least one media type which uses the same port number to conduct transmission, where n is a positive integer, and m is a positive integer which is smaller than n. The technical solution of the present invention can realize the port multiplexing of a plurality of media streams, thereby reducing the resource overhead of multimedia stream communications.

## Description

This application claims the priority to Chinese Patent Application No. 201310636386.0, entitled "METHOD AND DEVICE FOR MEDIA MULTIPLEXING NEGOTIATION" and filed on November 27, 2013, which is incorporated herein by reference in its entirety.

### TECHNICAL FIELD

The invention relates to the field of communication, and in particular to a method and a device for media multiplexing negotiation.

### BACKGROUND

In recent years, the application of multimedia real time communication technology is becoming more and more widespread. Some teleconferencing systems have increased in popularity because of their advantages such as life size, high definition and immersive experience. Some applications and services of web browser based web real time communication (Web Real Time Communication, Web RTC) have also extended rapidly. In these multimedia communication technologies, multimedia terminals are usually provided with multiple audio collection devices and playback devices, and thus a multimedia stream intercommunication scenario between the multimedia terminals is constructed during a communication procedure, in which multiple media streams are transmitted in different transmission channels. In this case, transmission of the multiple media streams requires a high cost for network address translation (Network Address Translation, NAT) and firewall traversal, that is, more transmission resource overhead.

### SUMMARY

A method and a device for media multiplexing negotiation are provided according to embodiments of the invention, to achieve port multiplexing for multiple media streams by negotiation, and thus reduce resource overhead of multimedia stream communication.

In a first aspect, a method for media multiplexing negotiation is provided, which includes: transmitting a negotiation request message to a responding end, where the negotiation request message includes information on n media types; and receiving a negotiation response message transmitted from the responding end, where the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, where n is a positive integer, and m is a positive integer smaller than n.

In conjunction with the first aspect, in a first implementation of the first aspect, the negotiation response message includes multiplexing information on the n media types, where in a case that an i-th multiplexing relationship of the m multiplexing relationships corresponds to a plurality of media types of the n media types, multiplexing information on a first media type of the plurality of media types includes a first port number of the responding end, and multiplexing information on other media types of the plurality of media types except for the first media type includes a port number 0, to indicate that transmission for the plurality of media types is performed using the first port number of the responding end, where i is any positive integer smaller than m.

In conjunction with the first aspect and the above implementation of the first aspect, in a second implementation of the first aspect, information on each media type of the n media types includes: a port number of the requesting end corresponding to the each media type, which is determined by the requesting end.

In conjunction with the first aspect and the above implementations of the first aspect, in a third implementation of the first aspect, the information on each media type of the information on the n media types further includes at least one of: at least one encode-decode type supported by the each media type and a payload type PT value corresponding to each encode-decode type of the at least one encode-decode type, which are determined by the requesting end; a bandwidth required for transmitting the each media type; interactive connectivity establishment ICE candidate address information on the each media type; information indicating that the each media type supports real-time transport protocol RTP and real-time transport control protocol RTCP multiplexing; and capability information indicating a capability of the requesting end to transmit and receive a media stream of the at least one encode-decode type.

In conjunction with the first aspect and the above implementations of the first aspect, in a fourth implementation of the first aspect, the capability information includes a maximum reception number and a maximum transmission number of the requesting end for a media stream of one or more encode-decode type of the at least one encode-decode type.

In conjunction with the first aspect and the above implementations of the first aspect, in a fifth implementation of the first aspect, the multiplexing information on the first media type further includes at least one of: at least one encode-decode type supported by the first media type and a PT value corresponding to each encode-decode type of the at least one encode-decode type, which are determined by the responding end; a sum of bandwidths required by the plurality of media types corresponding to the i-th multiplexing relationship; and a maximum reception number and a maximum transmission number of the responding end for a media stream of one or more encode-decode type of the at least one encode-decode type.

In conjunction with the first aspect and the above implementations of the first aspect, in a sixth implementation of the first aspect, the multiplexing information on the first media type further includes at least one of: ICE candidate address information included in information on the first media type; and information indicating that the first media type supports RTP and RTCP multiplexing.

In conjunction with the first aspect and the above implementations of the first aspect, in a seventh implementation of the first aspect, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end corresponding to the second media type, which is determined by the responding end.

In conjunction with the first aspect and the above implementations of the first aspect, in an eighth implementation of the first aspect, after receiving the negotiation response message transmitted from the responding end, the method further includes: transmitting a media stream of the plurality of media types corresponding to the i-th multiplexing relationship using a first port number of the requesting end and the first port number of the responding end; and transmitting a media stream of the second media type using a second port number of the requesting end and a second port number of the responding end.

In conjunction with the first aspect and the above implementations of the first aspect, in a ninth implementation of the first aspect, the negotiation request message further includes session layer attribute information indicating that the requesting end supports media multiplexing.

In a second aspect, a method for media multiplexing negotiation is provided, which includes: receiving a negotiation request message transmitted from a requesting end, where the negotiation request message includes information on n media types; determining a negotiation response message according to the negotiation request message, where the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, where n is a positive integer, and m is a positive integer smaller than n; and transmitting the negotiation response message to the requesting end.

In conjunction with the second aspect, in a first implementation of the second aspect, in a case that an i-th multiplexing relationship of the m multiplexing relationships corresponds to a plurality of media types of the n media types, multiplexing information on a first media type of the plurality of media types includes a first port number of the responding end, and multiplexing information on other media types of the plurality of media types except for the first media type includes a port number 0, to indicate that transmission for the plurality of media types is performed using the first port number of the responding end, where i is any positive integer smaller than m.

In conjunction with the second aspect and the above implementation of the second aspect, in a second implementation of the second aspect, information on each media type of the n media types includes: a port number of the requesting end corresponding to the each media type, which is determined by the requesting end.

In conjunction with the second aspect and the above implementations of the second aspect, in a third implementation of the second aspect, the information on each media type of the information on the n media types includes at least one of: at least one encode-decode type supported by the each media type and a payload type PT value corresponding to each encode format of the at least one encode-decode type, which are determined by the requesting end; a bandwidth required for transmitting the each media type; interactive connectivity establishment ICE candidate address information on the each media type; information indicating that the each media type supports real-time transport protocol RTP and real-time transport control protocol RTCP multiplexing; and capability information indicating a capability of the requesting end to transmit and receive a media stream of the at least one encode-decode type.

In conjunction with the second aspect and the above implementations of the second aspect, in a fourth implementation of the second aspect, the capability information includes a maximum reception number and a maximum transmission number of the requesting end for a media stream of one or more encode-decode type of the at least one encode-decode type.

In conjunction with the second aspect and the above implementations of the second aspect, in a fifth implementation of the second aspect, the multiplexing information on the first media type further includes at least one of: at least one encode-decode type supported by the first media type and a PT value corresponding to each encode-decode type of the at least one encode-decode type, which are determined by the responding end; a sum of bandwidths required by the plurality of media types corresponding to the i-th multiplexing relationship; and a maximum reception number and a maximum transmission number of the responding end for a media stream of one or more encode-decode type of the at least one encode-decode type.

In conjunction with the second aspect and the above implementations of the second aspect, in a sixth implementation of the second aspect, the multiplexing information on the first media type further includes at least one of: ICE candidate address information included in information on the first media type; and information indicating that the first media type supports RTP and RTCP multiplexing.

In conjunction with the second aspect and the above implementations of the second aspect, in a seventh implementation of the second aspect, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end corresponding to the second media type, which is determined by the responding end.

In conjunction with the second aspect and the above implementations of the second aspect, in an eighth implementation of the second aspect, after receiving the negotiation response message transmitted from the responding end, the method further includes: transmitting a media stream of the plurality of media types corresponding to the i-th multiplexing relationship using a first port number of the requesting end and the first port number of the responding end; and transmitting a media stream of the second media type using a second port number of the requesting end and a second port number of the responding end.

In conjunction with the second aspect and the above implementations of the second aspect, in a ninth implementation of the second aspect, the negotiation request message further includes session layer attribute information indicating that the requesting end supports media multiplexing.

In a third aspect, a requesting end is provided, with includes: a transmitting unit, configured to transmit a negotiation request message to a responding end, where the negotiation request message includes information on n media types; and a receiving unit, configured to receive a negotiation response message transmitted from the responding end, where the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, where n is a positive integer, and m is a positive integer smaller than n.

In conjunction with the third aspect, in a first implementation of the third aspect, the negotiation response message received by the receiving unit includes multiplexing information on the n media types, where in a case that an i-th multiplexing relationship of the m multiplexing relationships corresponds to a plurality of media types of the n media types, multiplexing information on a first media type of the plurality of media types includes a first port number of the responding end, and multiplexing information on other media types of the plurality of media types except for the first media type includes a port number 0, to indicate that transmission for the plurality of media types is performed using the first port number of the responding end, where i is any positive integer smaller than m.

In conjunction with the third aspect and the above implementation of the third aspect, in a second implementation of the third aspect, information on each media type of the n media types includes: a port number of the requesting end corresponding to the each media type, which is determined by the requesting end.

In conjunction with the third aspect and the above implementations of the third aspect, in a third implementation of the third aspect, the information on each media type of the information on the n media types further includes at least one of: at least one encode-decode type supported by the each media type and a payload type PT value corresponding to each encode-decode type of the at least one encode-decode type, which are determined by the requesting end; a bandwidth required for transmitting the each media type; interactive connectivity establishment ICE candidate address information on the each media type; information indicating that the each media type supports real-time transport protocol RTP and real-time transport control protocol RTCP multiplexing; and capability information indicating a capability of the requesting end to transmit and receive a media stream of the at least one encode-decode type.

In conjunction with the third aspect and the above implementations of the third aspect, in a fourth implementation of the third aspect, the capability information includes a maximum reception number and a maximum transmission number of the requesting end for a media stream of one or more encode-decode type of the at least one encode-decode type.

In conjunction with the third aspect and the above implementations of the third aspect, in a fifth implementation of the third aspect, the multiplexing information on the first media type further includes at least one of: at least one encode-decode type supported by the first media type and a PT value corresponding to each encode-decode type of the at least one encode-decode type, which are determined by the responding end; a sum of bandwidths required by the plurality of media types corresponding to the i-th multiplexing relationship; and a maximum reception number and a maximum transmission number of the requesting end for one or more encode-decode type determined by the responding end according to the capability information.

In conjunction with the third aspect and the above implementations of the third aspect, in a sixth implementation of the third aspect, the multiplexing information on the first media type further includes at least one of: ICE candidate address information included in information on the first media type; and information indicating that the first media type supports RTP and RTCP multiplexing.

In conjunction with the third aspect and the above implementations of the third aspect, in a seventh implementation of the third aspect, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end corresponding to the second media type, which is determined by the responding end.

In conjunction with the third aspect and the above implementations of the third aspect, in an eighth implementation of the third aspect, the requesting end further includes a transmission unit, configured to: transmit a media stream of the plurality of media types corresponding to the i-th multiplexing relationship using a first port number of the requesting end and the first port number of the responding end; and transmit a media stream of the second media type using a second port number of the requesting end and a second port number of the responding end.

In conjunction with the third aspect and the above implementations of the third aspect, in a ninth implementation of the third aspect, the negotiation request message transmitted from the transmitting unit further includes session layer attribute information indicating that the requesting end supports media multiplexing.

In a fourth aspect, a responding end is provided, which includes: a receiving unit, configured to receive a negotiation request message transmitted from a requesting end, where the negotiation request message includes information on n media types; a determination unit, configured to determine a negotiation response message according to the negotiation request message received by the receiving unit, where the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, where n is a positive integer, and m is a positive integer smaller than n; and a transmitting unit, configured to transmit the negotiation response message determined by the determination unit to the requesting end.

In conjunction with the fourth aspect, in a first implementation of the fourth aspect, in a case that an i-th multiplexing relationship of the m multiplexing relationships corresponds to a plurality of media types of the n media types, multiplexing information on a first media type of the plurality of media types includes a first port number of the responding end, and multiplexing information on other media types of the plurality of media types except for the first media type includes a port number 0, to indicate that transmission for the plurality of media types is performed using the first port number of the responding end, where i is any positive integer smaller than m.

In conjunction with the fourth aspect and the above implementation of the fourth aspect, in a second implementation of the fourth aspect, information on each media type of the n media types includes: a port number of the requesting end corresponding to the each media type, which is determined by the requesting end.

In conjunction with the fourth aspect and the above implementations of the fourth aspect, in a third implementation of the fourth aspect, the information on each media type of the information on the n media types further includes at least one of: at least one encode-decode type supported by the each media type and a payload type PT value corresponding to each encode format of the at least one encode-decode type, which are determined by the requesting end; a bandwidth required for transmitting the each media type; interactive connectivity establishment ICE candidate address information on the each media type; information indicating that the each media type supports real-time transport protocol RTP and real-time transport control protocol RTCP multiplexing; and capability information indicating a capability of the requesting end to transmit and receive a media stream of the at least one encode-decode type.

In conjunction with the fourth aspect and the above implementations of the fourth aspect, in a fourth implementation of the fourth aspect, the capability information includes a maximum reception number and a maximum transmission number of the requesting end for a media stream of one or more encode-decode type of the at least one encode-decode type.

In conjunction with the fourth aspect and the above implementations of the fourth aspect, in a fifth implementation of the fourth aspect, the multiplexing information on the first media type further includes at least one of: at least one encode-decode type supported by the first media type and a PT value corresponding to each encode-decode type of the at least one encode-decode type, which are determined by the determination unit; a sum of bandwidths required by the plurality of media types corresponding to the i-th multiplexing relationship; and a maximum reception number and a maximum transmission number of the requesting end for one or more encode-decode type determined by the determination unit according to the capability information.

In conjunction with the fourth aspect and the above implementations of the fourth aspect, in a sixth implementation of the fourth aspect, the multiplexing information on the first media type further includes at least one of: ICE candidate address information included in information on the first media type; and information indicating that the first media type supports RTP and RTCP multiplexing.

In conjunction with the fourth aspect and the above implementations of the fourth aspect, in a seventh implementation of the fourth aspect, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end corresponding to the second media type, which is determined by the determination unit.

In conjunction with the fourth aspect and the above implementations of the fourth aspect, in an eighth implementation of the fourth aspect, the responding end further includes a transmission unit, configured to: transmit a media stream of the plurality of media types corresponding to the i-th multiplexing relationship using a first port number of the requesting end and the first port number of the responding end; and transmit a media stream of the second media type using a second port number of the requesting end and a second port number of the responding end.

In conjunction with the fourth aspect and the above implementations of the fourth aspect, in a ninth implementation of the fourth aspect, the negotiation request message further includes session layer attribute information indicating that the requesting end supports media multiplexing.

In the embodiments of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced.

### BRIEF DESCRIPTION OF DRAWINGS

In order to illustrate the technical solutions according to the embodiments of the present invention more clearly, drawings to be used in the description of the embodiments of the invention will be described briefly hereinafter. Apparently, the drawings described hereinafter are only some embodiments of the present invention, and other drawings may be obtained by those skilled in the art according to those drawings without creative labor.
Figure 1 is a flow chart of a method for media multiplexing negotiation according to an embodiment of the invention;
Figure 2 is a flow chart of a method for media multiplexing negotiation according to an embodiment of the invention;
Figure 3 is an interaction diagram of a method for media multiplexing negotiation according to an embodiment of the invention;
Figure 4 is a schematic block diagram of a requesting end according to an embodiment of the invention;
Figure 5 is a schematic block diagram of a responding end according to an embodiment of the invention;
Figure 6 is a schematic block diagram of a requesting end according to another embodiment of the invention; and
Figure 7 is a schematic block diagram of a responding end according to another embodiment of the invention.

### DESCRIPTION OF EMBODIMENTS

Technical solutions according to embodiments of the present invention are described clearly and completely hereinafter in conjunction with drawings used in the embodiments of the present invention. Apparently, the described embodiments are only some rather than all of embodiments of the present invention. Any other embodiments obtained by those skilled in the art based on the embodiments of the present invention without any creative work fall within the scope of protection of the present invention.

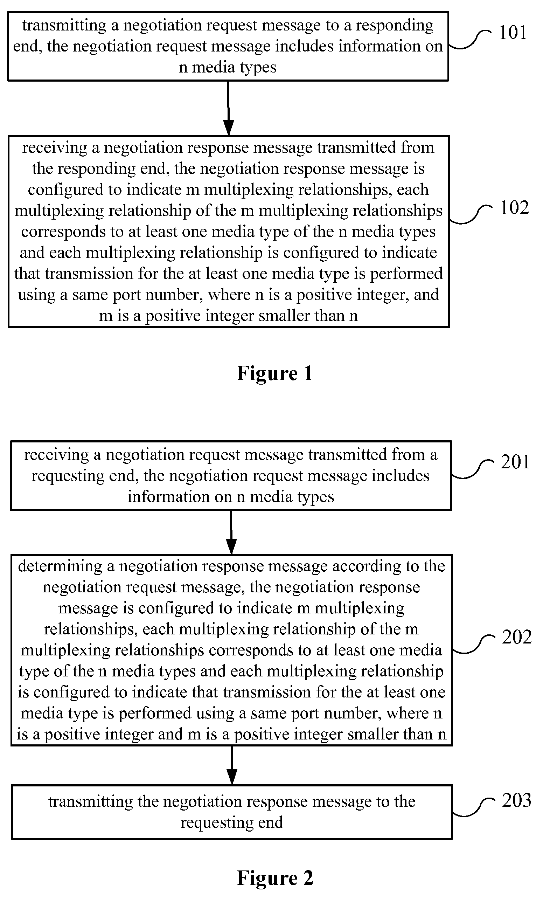

Figure 1 is a flow chart of a method for media multiplexing negotiation according to an embodiment of the invention. The method illustrated in Figure 1 is performed by a requesting end.

In 101, a negotiation request message is transmitted to a responding end. The negotiation request message includes information on n media types.

In 102, a negotiation response message transmitted from the responding end is received. The negotiation response message is configured to indicate m multiplexing relationships. Each multiplexing relationship of the m multiplexing relationships corresponds to at least one media type of the n media types, and each multiplexing relationship is configure to indicate that transmission for the at least one media type is performed using a same port number. n is a positive integer, and m is a positive integer smaller than n.

In the embodiment of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced.

It should be understood that, in the embodiment of the invention, two ends implementing the method for media multiplexing negotiation are the requesting end and the responding end. The requesting end and the responding end may be two terminal devices with multimedia transceiving function which are to be communicated, or devices for controlling media stream transceiving of two multimedia systems (for example, teleconference systems), or two virtual terminals (two ends which are performing network real-time communication WebRTC) which are performing multimedia communication, or the like, which is not limited herein.

Optionally, as an embodiment, in step 102, the negotiation response message includes multiplexing information on the n media types. In a case that an i-th multiplexing relationship of the m multiplexing relationships corresponds to multiple media types of the n media types, multiplexing information on a first media type of the multiple media types includes a first port number of the responding end, and multiplexing information on other media types of the multiple media types except for the first media type includes a port number 0, to indicate that transmission for the multiple media types is performed using the first port number of the responding end, where i is any positive integer smaller than m.

It should be understood that, the i-th multiplexing relationship indicates that multiple media types of the n media types are multiplexed together, and media streams of the multiple media types are transmitted using a same port number. The multiplexing information on the first media type of the multiple media types includes a port number used for transmitting media streams of the multiple media types, i.e., the first port number of the responding end. The other media types are multiplexed on the first port number of the responding end. The port number included in the multiplexing information on the other media types is a pre-agreed value, and the pre-agreed value, when used as a port number, indicates that the other media types described above are multiplexed, and an intermediate device does not allocate transmission recourses for the other media types. The pre-agreed value may be a value which is not in conflict with port numbers actually used. For example, the pre-agreed value may be 0 or 60000, which is not limited herein.

Optionally, as an embodiment, information on each media type of the n media types includes a port number of the requesting end corresponding to each media type determined by the requesting end. That is, the requesting end allocates a port number of the requesting end for each media type to be negotiated, and the allocated port numbers may be different from each other to avoid error report due to unfriendliness of the intermediate device because of identical port numbers.

Optionally, as an embodiment, the information on each media type of the information on the n media types further includes at least one of: at least one encode-decode type supported by each media type and a payload type PT value corresponding to each encode-decode type of the at least one encode-decode type, which are determined by the requesting end; a bandwidth required for transmitting each media type; interactive connectivity establishment ICE candidate address information on each media type; information indicating that each media type supports real-time transport protocol RTP and real-time transport control protocol RTCP multiplexing; and capability information indicating a capability of the requesting end to transmit and receive a media stream of the at least one encode-decode type.

Optionally, as an embodiment, the capability information includes a maximum reception number and a maximum transmission number of the requesting end for a media stream of one or more encode-decode type of the at least one encode-decode type. It should be understood that the capability information is determined by the requesting end according to the local capability and a service requirement. The information on each media type may include multiple different pieces of capability information, and there is an "or" relation among the different pieces of capability information for selection by the responding end. The maximum reception number and the maximum transmission number may be different, that is, asymmetry negotiation for multimedia streams between the requesting end and the responding end can be achieved by transmission of the capability information.

Optionally, as an embodiment, the multiplexing information on the first media type further includes at least one of: at least one encode-decode type supported by the first media type and a PT value corresponding to each encode-decode type of the at least one encode-decode type, which are determined by the responding end; a sum of bandwidths required by the multiple media types corresponding to the i-th multiplexing relationship; and a maximum reception number and a maximum transmission number of the responding end for a media stream of one or more encode-decode type of the at least one encode-decode type. It should be understood that, in the i-th multiplexing relationship, media streams of the other media types are multiplexed onto the first media type and the port number in the multiplexing information on the other media types is set to 0 or other predefined value. In this case, the intermediate device does not parse the multiplexing information on the other media types or does not allocate transmission recourses for the other media types. Therefore, the multiplexing information on the first media type needs to include bandwidths required by all the media types corresponding to the i-th multiplexing relationship, and thus the intermediate device can allocate enough transmission resources for the multiplexed media streams.

Optionally, as an embodiment, the multiplexing information on the first media type further includes at least one of: ICE candidate address information included in information on the first media type; and information indicating that the first media type supports RTP and RTCP multiplexing.

Optionally, as an embodiment, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end corresponding to the second media type, which is determined by the responding end. That is, in a case that the second media type is not multiplexed, the responding end separately allocates a second port number of the responding end for the second media type, and thus media streams of the second media type is transmitted using the second port number of the requesting end and the second port number of the responding end subsequently.

Optionally, as an embodiment, after receiving the negotiation response message transmitted from the responding end, the method further includes: transmitting a media stream of the multiple media types corresponding to the i-th multiplexing relationship using the first port number of the requesting end and the first port number of the responding end; and transmitting a media stream of the second media type using the second port number of the requesting end and the second port number of the responding end. It should be understood that the first port number of the responding end in the multiplexing information on the first media type is used as a port number for multiplexing and are used by media streams of the multiple media types together. Correspondingly, the first port number of the requesting end included in the information on the first media type may be used by the multiple media types.

Optionally, as an embodiment, the negotiation request message further includes session layer attribute information indicating that the requesting end supports media multiplexing. That is, upon reception of the negotiation request message, the responding end can learn that the requesting end supports media multiplexing, and therefore, the responding end can determine the negotiation response message indicating m multiplexing relationships.

In the embodiment of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced. In addition, in the negotiation response message, the port number in the multiplexing information on the multiplexed media types is set to a pre-agreed value, and therefore, unfriendliness of the intermediate device can be avoided. In addition, asymmetry negotiation of multimedia streams can be achieved by interacting the capability information of transmitting and receiving media streams.

Figure 2 is a flow chart of a method for media multiplexing negotiation according to an embodiment of the invention. The method illustrated in Figure 2 is performed by a responding end.

In 201, a negotiation request message transmitted from a requesting end is received. The negotiation request message includes information on n media types.

In 202, a negotiation response message is determined according to the negotiation request message. The negotiation response message is configured to indicate m multiplexing relationships. Each multiplexing relationship of the m multiplexing relationships corresponds to at least one media type of the n media types and each multiplexing relationship is configured to indicate that transmission for the at least one media type is performed using a same port number. n is a positive integer, and m is a positive integer smaller than n.

In 203, the negotiation response message is transmitted to the requesting end.

In the embodiment of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced.

It should be understood that, in the embodiment of the invention, two ends implementing the method for media multiplexing negotiation are the requesting end and the responding end. The requesting end and the responding end may be two terminal devices with multimedia transceiving function which are to be communicated, or devices for controlling media stream transceiving of two multimedia systems (for example, teleconference systems), or two virtual terminals (two ends which are performing network real-time communication WebRTC) which are performing multimedia communication, or the like, which is not limited herein.

Optionally, as an embodiment, in step 202, determining the negotiation response message according to the negotiation request message includes: determining m multiplexing relationships for the n media types; and determining multiplexing information on the n media types according to the m multiplexing relationships. That is, upon reception of the negotiation request message transmitted from the requesting end, the responding end classifies media streams of the n media types provided in the negotiation request message into m multiplexing relationships according to a local capability of the responding end and an actual service requirement. It should be understood that, the m multiplexing relationships may refer to all the media streams of the n media types, i.e., all-multiplexing, or may refer to some of the media types, i.e., partial multiplexing. Media streams related to each multiplexing relationship of the m multiplexing relationships are multiplexed on a same port number.

Optionally, as an embodiment, in a case that an i-th multiplexing relationship of the m multiplexing relationships corresponds to multiple media types of the n media types, multiplexing information on a first media type of the multiple media types includes a first port number of the responding end, and multiplexing information on other media types of the multiple media types except for the first media type includes a port number 0, to indicate that transmission for the multiple media types is performed using the first port number of the responding end, where i is any positive integer smaller than m.

It should be understood that, the i-th multiplexing relationship indicates that multiple media types of the n media types are multiplexed together, and media streams of the multiple media types are transmitted using a same port number. The multiplexing information on the first media type of the multiple media types includes a port number used for transmitting media streams of the multiple media types, i.e., the first port number of the responding end. The other media types are multiplexed on the first port number of the responding end. The port number included in the multiplexing information on the other media types is a pre-agreed value, and the pre-agreed value, when used as a port number, indicates that the other media types described above are multiplexed, and an intermediate device does not allocate transmission recourses for the other media types. The pre-agreed value may be a value which is not in conflict with port numbers actually used. For example, the pre-agreed value may be 0 or 60000, which is not limited herein.

Optionally, as an embodiment, information on each media type of the n media types includes a port number of the requesting end corresponding to each media type determined by the requesting end. That is, the requesting end allocates a port number of the requesting end for each media type to be negotiated, and the allocated port numbers may be different from each other to avoid error report due to unfriendliness of the intermediate device because of identical port numbers.

Optionally, as an embodiment, the information on each media type of the information on the n media types further includes at least one of: at least one encode-decode type supported by each media type and a payload type PT value corresponding to each encode format of the at least one encode-decode type, which are determined by the requesting end; a bandwidth required for transmitting each media type; interactive connectivity establishment ICE candidate address information on each media type; information indicating that each media type supports real-time transport protocol RTP and real-time transport control protocol RTCP multiplexing; and capability information indicating a capability of the requesting end to transmit and receive a media stream of the at least one encode-decode type.

Optionally, as an embodiment, the capability information includes a maximum reception number and a maximum transmission number of the requesting end for a media stream of one or more encode-decode type of the at least one encode-decode type. It should be understood that the capability information is determined by the requesting end according to the local capability and a service requirement. The information on each media type may include multiple different pieces of capability information, and there is an "or" relation among the different pieces of capability information for selection by the responding end. The maximum reception number and the maximum transmission number may be different, that is, asymmetry negotiation for multimedia streams between the requesting end and the responding end can be achieved by transmission of the capability information.

Optionally, as an embodiment, the multiplexing information on the first media type further includes at least one of: at least one encode-decode type supported by the first media type and a PT value corresponding to each encode-decode type of the at least one encode-decode type, which are determined by the responding end; a sum of bandwidths required by the multiple media types corresponding to the i-th multiplexing relationship; and a maximum reception number and a maximum transmission number of the responding end for a media stream of one or more encode-decode type of the at least one encode-decode type. It should be understood that, in the i-th multiplexing relationship, media streams of the other media types are multiplexed onto the first media type and the port number in the multiplexing information on the other media types is set to 0 or other predefined value. In this case, the intermediate device does not parse the multiplexing information on the other media types or does not allocate transmission recourses for the other media types. Therefore, the multiplexing information on the first media type needs to include bandwidths required by all the media types corresponding to the i-th multiplexing relationship, and thus the intermediate device can allocate enough transmission resources for the multiplexed media streams.

Optionally, as an embodiment, the multiplexing information on the first media type further includes at least one of: ICE candidate address information included in information on the first media type; and information indicating that the first media type supports RTP and RTCP multiplexing.

Optionally, as an embodiment, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end corresponding to the second media type, which is determined by the responding end. That is, in a case that the second media type is not multiplexed, the responding end separately allocates a second port number of the responding end for the second media type, and thus media streams of the second media type is transmitted using the second port number of the requesting end and the second port number of the responding end subsequently.

Optionally, as an embodiment, after receiving the negotiation response message transmitted from the responding end, the method further includes: transmitting a media stream of the multiple media types corresponding to the i-th multiplexing relationship using the first port number of the requesting end and the first port number of the responding end; and transmitting a media stream of the second media type using the second port number of the requesting end and the second port number of the responding end. It should be understood that the first port number of the responding end in the multiplexing information on the first media type is used as a port number for multiplexing and are used by media streams of the multiple media types together. Correspondingly, the first port number of the requesting end included in the information on the first media type may be used by the multiple media types.

Optionally, as an embodiment, the negotiation request message further includes session layer attribute information indicating that the requesting end supports media multiplexing. That is, upon reception of the negotiation request message, the responding end can learn that the requesting end supports media multiplexing, and therefore, the responding end can determine the negotiation response message indicating m multiplexing relationships.

In the embodiment of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced. In addition, in the negotiation response message, the port number in the multiplexing information on the multiplexed media types is set to a pre-agreed value, and therefore unfriendliness of the intermediate device can be avoided. In addition, asymmetry negotiation of multimedia streams can be achieved by interacting the capability information of transmitting and receiving media streams.

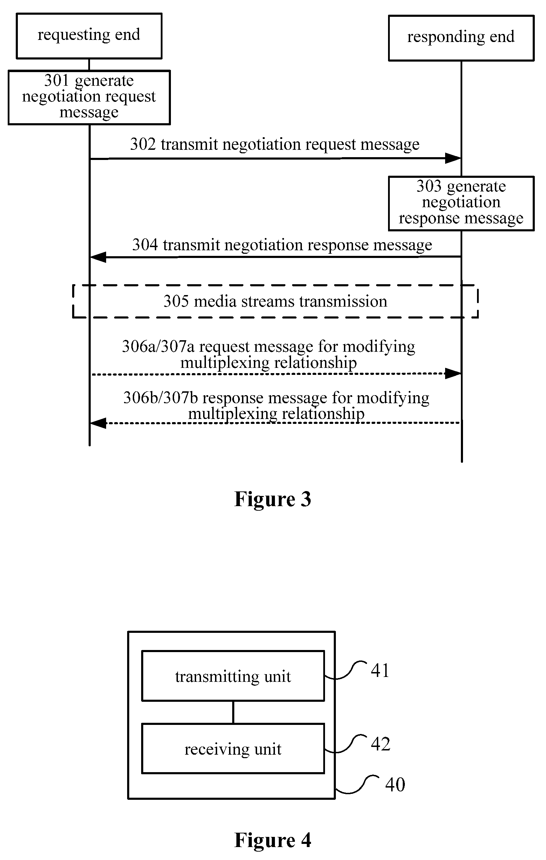

Figure 3 is an interaction diagram of a method for media multiplexing negotiation according to an embodiment of the invention.

In 301, a requesting end generates a negotiation request message.

The requesting end initiates media multiplexing negotiation of multiple media streams. Specifically, for a media type to be negotiated, information on the media type is firstly determined. The information on the media type may include a port number of the requesting end corresponding to the media type, and an encode-decode type of the media type supported by the requesting end. For example, the media type is video, and the encode-decode type of a media stream (video stream) of the media type may include H261, H263, H264, and the like. In addition, different encode-decode types may correspond to different payload type (Payload Type, PT) values. For example, the PT value corresponding to H263 may be 99, and the PT value corresponding to H264 may be 98. It should be understood that, the correspondence between the PT value and the encode-decode type may refer to the agreement in the existing protocol, or may be self-defined, which is not limited herein.

Further, information on the media type may include capability information of the requesting end for transmitting and receiving media streams of each encode-decode type of the media type. Specifically, the capability information may be determined by the requesting end according to capability of the requesting end and a service requirement, and is configured to indicate a maximum number of reception channels and a maximum number of transmission channels for any one or more encode-decode types of the above encode-decode types. For example, a=max-stream:{0:2:3&8:3:2} {97:5:0} indicates two optional schemes. In the first scheme, for a media stream with a PT value of 0, the requesting end can receive 2 channels of the media streams at most and transmit 3 channels of the media streams at most, and for a media stream with a PT value of 8, the requesting end can receive 3 channels of the media streams at most and transmit 2 channels of media streams at most. In the second scheme, for a media stream with a PT value of 97, the requesting end can receive 5 channels of the media streams at most but does not support transmitting. That is, "&" may indicate an "AND" relationship, and "{}" may indicate an "OR" relationship, i.e., the requesting end simultaneously supports the transmission and reception numbers of media streams with the PTs in "{}". It should be understood that the above symbols "&" and "{}" are only used to indicate logical relationships between optional schemes, and ways for representing the capability information of the invention is not limited thereto.

The information on the media type may further include: a bandwidth required by media streams of the media type, a declaration indicating that the media type supports RTP and RTCP multiplexing, and ICE candidate address information on the media type. In a case that negotiation for the declaration indicating that the media type supports RTP and RTCP multiplexing is successful, RTP and RTCP messages are multiplexed on one transmission channel for transmission in subsequent transmission of the media type. In this way, costs for NAT and firewall traversal can be reduced, that is, the number of mapped ports is reduced and a session signaling establishment delay is reduced. Further, keep alive of NAT traversal can be achieved by utilizing the mechanism or characteristic of periodical transmission of RTCP messages.

As an example, information on a media type is illustrated by the following pseudo codes.
m=video 10002 RTP/AVP 98 99
b=AS:1000
a=rtcp-mux
a=rtpmap:98 H264/90000
a=rtpmap:99 H263-2000/90000
a=max-stream: {98:2:1&99:3:1} {98:1:1&99:4:1} {99:5:0}
a=candidate:1 1 UDP 1694498815 host.huawei.com 10002 typ host
"m=" field identifies beginning of information on the media type, where it is defined that the media type is video vedio, the port number of the requesting end corresponding to the media type is 10002, the applicable protocol of the media type is RTP/AVP, and PT values supported by the media type are 98 and 99. "b=AS:1000" represents that the bandwidth required by the media type is 1000. "a=rtcp-mux" represents that RTP and RTCP multiplexing is supported. The PT values and a correspondence of PT are included in the "a=" field. In the above example, the encode-decode type corresponding to the PT value of 98 is H264, and the encode-decode type corresponding to the PT value of 99 is H263-2000. Capability information provided by the requesting end and ICE candidate address information supported by the requesting end are further illustrated in the example, i.e., "candidate:11 UDP 1694498815 host.huawei.com 10002 typ host".

It should be understood that the above is only an example to facilitate description, and the information on the media type in the example includes all optional information. In practice, information on the media type is determined by the requesting end according to capability of the requesting end and a specific service requirement. The capability of the requesting end indicates the media type supported by the requesting end, the encode-decode type supported by the requesting end and maximum transmission and reception capability supported by the requesting end. The specific service requirement indicates the media type, the encode-decode type, the service traffic and the like of multimedia stream communication required by a specific service for which the negotiation is initiated. For example, in a video conference service, the included media types include video and audio, and may also include text, and encode-decode types of the video, the audio and the text depend on video collecting and playing terminals and audio collecting and playing terminals employed.

The requesting end generates the negotiation request message according to n media types to be negotiated. Besides the information on the n media types, the negotiation request message may further include a session layer attribute indicating to the responding end that the requesting end supports media multiplexing. As an example, a negotiation request message is illustrated by the following pseudo codes.
a=Multiplexing
**m=audio** 10000 RTP/AVP 0 8 97
b=AS:200
a=rtcp-mux
a=rtpmap:0 PCMU/8000
a=rtpmap:8 PCMA/8000
a=rtpmap:97 iLBC/8000
a=max-stream: {0:2:3&8:3:2} {0:1:4&97:4:1} {97:5:0}
a=candidate:1 1 UDP 1694498815 host.huawei.com 10000 typ host
m=**video** 10002 RTP/AVP 98 99
b=AS:1000
a=rtcp-mux
a=rtpmap:98 H264/90000
a=rtpmap:99 H263-2000/90000
a=max-stream: {98:2:1&99:3:1} {98:1:1&99:4:1} {99:5:0}
a=candidate:1 1 UDP 1694498815 host.huawei.com 10002 typ host
m=**text** 10004 RTP/AVP 100
b=AS:20
a=rtcp-mux
a=rtpmap:100 t140/1000
a=candidate:1 1 UDP 1694498815 host.huawei.com 10004 typ host
**m=application** 10006 UDP/DTLS/BFCP *
b=AS:20
a=candidate:1 1 UDP 1694498815 host.huawei.com 10006 typ host
"a=Multiplexing" is the session layer attribute which represents that the requesting end supports media multiplexing. The negotiation request message includes information on 4 media types which are audio, video, text and application respectively. The content of the information on each media type has a same meaning as that of the information on the media type in the above example, and is not described here in detail.

Preferably, before the media multiplexing negotiation is successful, different media types in the negotiation request message correspond to different port numbers of the requesting end, thereby avoiding unfriendliness of the intermediate device of the network.

In 302, the requesting end transmits the negotiation request message to the responding end.

After the negotiation request message is generated, the negotiation request message may be transmitted to the responding end with a method in a session description protocol (Session Description Protocol, SDP).

In 303, the responding end generates a negotiation response message.

Upon reception of the negotiation request message, the responding end determines a multiplexing relationship for the n media types according to request information on the n media types in the negotiation request message in conjunction with capability of the responding end and the specific service requirement, generates multiplexing information on the n media types according to the multiplexing relationship, and accordingly generates the negotiation response message, to indicate the multiplexing decision made by the responding end to the requesting end.

There are the following cases for multiplexing of the n media types: all the n media types are multiplexed together, that is, there is one multiplexing relationship; all the n media types are multiplexed, but the n media types are classified into multiple groups and then multiplexed, that is, there are multiple multiplexing relationships; some of the n media types are multiplexed; none of the n media types is multiplexed.

The responding end determines, according to the media multiplexing capability of the responding end and the specific service requirement, which media types of the n media types are multiplexed together and which media types of the n media types are not multiplexed.

It should be understood that there are following cases of multiplexing information on the media type according to multiplexing conditions of the media type. In the first media type, the first media type is multiplexed and multiplexing information on the first media type is reference information of the multiplexing relationship, that is, other multiplexed media types adopt the port number corresponding to the first media type. In the second media type, the second media type is multiplexed and adopts the port number corresponding to the first media type. In the third media type, the third media type is not multiplexed. Being not multiplexed is also can be regarded as a multiplexing relationship. It should be understood that the above first, second and third are only to distinguish the types.

The multiplexing information on the multiplexed media type may further include a field identifying that the media type is multiplexed. The field may be naming of the media type and the naming is arbitrary and configurable. In addition, the naming corresponding to the multiplexed media type is listed in a field, which indicates that the responding end supports media multiplexing, in the negotiation response message. If there are multiple multiplexing relationships, naming of the media types corresponding to the multiple multiplexing relationships are listed respectively.

As an example, a negotiation response message is illustrated by the following pseudo codes.
a=Multiplexing **foo bar bfcp**
m=**audio** 20000 RTP/AVP 0 8
b=AS:1220
a=mid:foo
a=rtcp-mux
a=rtpmap:0 PCMU/8000
a=rtpmap:8 PCMA/8000
a=max-stream: {0:2:3&8:3:2}
a=candidate:1 1 UDP 1694498815 host.huawei.com 20000 typ host
m=**video** 0 RTP/AVP 98 99
b=AS:1000
a=mid:bar
a=rtcp-mux
a=rtpmap:98 H264/90000
a=rtpmap:99 H263-2000/90000
a=max-stream: {98:2:1&99:3:1} {98:1:1&99:4:1}
m=text 20004 RTP/AVP 100
b=AS:20
a=rtcp-mux
a=rtpmap:100 t140/1000
a=candidate:1 1 UDP 1694498815 host.huawei.com 20004 typ host
m=**application** 0 UDP/DTLS/BFCP *
b=AS:20
a=mid:bfcp

The above negotiation response message corresponds to the negotiation request message in the example in the above step 301. That is, the multiplexing information on the 4 media types is generated for the information on the above 4 media types. The multiplexing information indicates two multiplexing relationships. In the first multiplexing relationship, media streams of audio, video and application are multiplexed together. In the second multiplexing relationship, the media stream of text is not multiplexed.

Specifically, "a=Multiplexing **foo bar bfcp"** indicates that the responding end supports media multiplexing, and media types named as "foo", "bar" and "bfcp" are multiplexed together. The naming is included in the multiplexing information on the corresponding media type.

Since the multiplexing information on the media type of audio audio is multiplexed and is used as reference information, port number 20000 declared in the multiplexing information on this media type is a port for multiplexing, and correspondingly, the port numbers of the video named as "bar" and the application named as "bfcp" multiplexed on this port are set to 0, to indicate that transmission for the two media types is performed using the port for multiplexing. The intermediate device of the network ignores the multiplexing information on the two media types and does not allocate recourse for the two media types, that is, the intermediate device is friendly. A bandwidth requirement of the audio is a sum of bandwidth requirements of all the multiplexed media types.

In addition, "a=max-stream:{0:2:3&8:3:2}" is a selection decision made by the responding end according to the capability information in the information on the media type of the requesting end. Besides being multiplexed on the same port, the multiplexed media types may be multiplexed on a same ICE candidate address. That is, ICE candidate address information may be kept in the multiplexing information on the audio, but not in the multiplexing information on the video and the multiplexing information on the application.

The responding end separately allocates a port number for the media type "text" which is not multiplexed, and the port number is different from port numbers of the responding end corresponding to other media types, to avoid unfriendliness of the intermediate device. Further, the media type which is not multiplexed may not adopt RTP and RTCP multiplexing.

In a case that the responding end does not support media multiplexing, or the responding end determines that none of the n media types provided by the requesting end is multiplexed, the negotiation response message may be illustrated by the following pseudo codes.
m=**audio** 20000 RTP/AVP 0
b=AS:200
a=rtpmap:0 PCMU/8000
a=candidate:1 1 UDP 1694498815 host.huawei.com 20000 typ host
m=**video** 20002 RTP/AVP 98
b=AS:1000
a=rtpmap:98 H264/90000
a=candidate:1 1 UDP 1694498815 host.huawei.com 20002 typ host
m=**text** 20004 RTP/AVP 100
b=AS:20
a=rtpmap:100 t140/1000
a=candidate:1 1 UDP 1694498815 host.huawei.com 20004 typ host
m=**application** 20006 UDP/DTLS/BFCP *
b=AS:20
a=candidate:1 1 UDP 1694498815 host.huawei.com 20006 typ host

Since none of the above 4 media types is multiplexed, the responding end allocates different port numbers for the 4 media types respectively.

In 304, the responding end transmits the negotiation response message to the requesting end.

The negotiation response message may be transmitted to the responding end with a method in a Session Description Protocol SDP.

In 305, the media streams are transmitted.

The negotiation request message in the above step 301 and the negotiation response message in the above step 303 are taken as an example. Three media types of the audio, the video and the application are multiplexed together and are transmitted using port 10000 of the requesting end and port 20000 of the responding end corresponding to the audio. The text which is not multiplexed is transmitted using port 10004 of the requesting end and port 20004 of the responding end. The payload type that can be transmitted using a port between port 10000 and port 20000 is PCMU, PCMA, H264 and H263-2000.

In 306a, a request message for modifying the multiplexing relationship.

After the initial negotiation is successful, the requesting end may modify the multiplexing relationship determined in the initial negotiation by initiating a request message. The step is optional and may be performed multiple times.

In a case that one or more media types are to be added into the multiplexing relationship determined in the initial negotiation, the port number in information on the media type is set to 0, a field identifying that the media type is multiplexed is added, and a bandwidth required by the media type is added to the bandwidth requirement in the reference information of the multiplexing relationship. ICE candidate address information corresponding to the media type is deleted if the candidate address information exists originally. As an example, a request message for modifying the multiplexing relationship is illustrated by the following pseudo codes.
a=Multiplexing: **foo bar bfcp text**
m=**audio** 10000 RTP/AVP 0 8
b=AS:1240
a=mid:foo
a=rtcp-mux
a=rtpmap:0 PCMU/8000
a=rtpmap:8 PCMA/8000
a=max-stream: {0:2:3&8:3:2}
a=candidate:1 1 UDP 1694498815 host.huawei.com 10000 typ host
m=**video** 0 RTP/AVP 98 99
b=AS:1000
a=mid:bar
a=rtcp-mux
a=rtpmap:98 H264/90000
a=rtpmap:99 H263-2000/90000
a=max-stream: {98:2:1&99:3:1} {98:1:1&99:4:1} {99:5:0}
m=**text** 0 RTP/AVP 100
b=AS:20
a=mid:text
a=rtcp-mux
a=rtpmap:100 t140/1000
m=**application** 0 UDP/DTLS/BFCP *
b=AS:20
a=mid:bfcp

This example is illustrated on the basis of the examples in step 301 and step 303. In the multiplexing relationship that has been successfully negotiated, 3 media types of audio, video and application are multiplexed together. If text is to be added into the multiplexing relationship, the port number corresponding to the text is set to 0, and naming is added to identify that the media type of the text is multiplexed. In addition, a bandwidth required by the text is added to a bandwidth declaration in the information on the media type of the audio.

In 306b, a response message for modifying the multiplexing relationship.

Corresponding to step 306a, the responding end may respond to the request message. The form and content of the response message is substantially the same as those of the request message in the above step 306a except for the port number for multiplexing. For example, the port number for multiplexing in the request message is 10000, while the port number in the response message is 20000, to indicate that the above 4 multiplexed media types are transmitted using port 10000 and port 20000.

In 307a, a request message for modifying the multiplexing relationship.

After the initial negotiation is successful, the requesting end may modify the multiplexing relationship determined in the initial negotiation by initiating a request message. The step is optional and may be performed multiple times.

In a case that one or more media types is to be deleted from the multiplexing relationship determined in the initial negotiation, a port number (non zero) different from the port number for multiplexing is allocated for the media type, the field identifying that the media type is multiplexed is deleted, and the bandwidth required by the media type is subtracted from the bandwidth requirement in the reference information of the multiplexing relationship. Corresponding candidate address information is added. As an example, a request message for modifying the multiplexing relationship is illustrated by the following pseudo codes.
a=Multiplexing: **foo bar**
m=**audio** 10000 RTP/AVP 0 8
b=AS:1200
a=mid:foo
a=rtcp-mux
a=rtpmap:0 PCMU/8000
a=rtpmap:8 PCMA/8000
a=max-stream: {0:2:3&8:3:2}
a=candidate:1 1 UDP 1694498815 host.huawei.com 10000 typ host
m=**video** 0 RTP/AVP 98 99
b=AS:1000
a=mid:bar
a=rtcp-mux
a=rtpmap:98 H264/90000
a=rtpmap:99 H263-2000/90000
a=max-stream: {98:2:1&99:3:1} {98:1:1&99:4:1} {99:5:0}
m=**text** 10004 RTP/AVP 100
b=AS:20
a=rtcp-mux
a=rtpmap:100 t140/1000
a=candidate:1 1 UDP 1694498815 host.huawei.com 10004 typ host
m=**application** 10006 UDP/DTLS/BFCP *
b=AS:20
a=fingerprint:SHA-1 \
4A:AD:B9:B1:3F:82:18:3B:54:02:12:DF:3E:5D:49:6B:19:E5:7C:AB
a=floorctrl:c-only s-only
a=candidate:1 1 UDP 1694498815 host.huawei.com 10006 typ host

In the multiplexing relationship that has been successfully negotiated, 4 media types of audio, video, text and application are multiplexed together. If the text and the application are to be deleted from the multiplexing relationship, port numbers 10004 and 10006 are allocated for the text and the application respectively. In addition, the bandwidth requirement of the two media types is subtracted from the total bandwidth requirement. And ICE candidate address information is added respectively.

In 307b, a response message for modifying the multiplexing relationship.

Corresponding to step 307a, the responding end may respond to the request message. The form and content of the response message is substantially the same as that of the request message in the above step 307a except for the port number corresponding to the media type. For example, the port number for multiplexing in the request message is 10000, and port numbers for text and application which are not multiplexed are 10004 and 10006 respectively, while the port number for multiplexing in the response message is 20000, and port numbers for text and application which are not multiplexed are 20004 and 20006 respectively, to indicate that the multiplexed audio and video are transmitted using port 10000 and port 20000, the text is transmitted using port 10004 and port 20004, and the application is transmitted using port 10006 and port 20006.

Figure 4 is a schematic block diagram of a requesting end according to an embodiment of the invention. The requesting end 40 shown in Figure 4 includes a transmitting unit 41 and a receiving unit 42.

The transmitting unit 41 transmits a negotiation request message to a responding end. The negotiation request message includes information on n media types. The receiving unit 42 receives a negotiation response message transmitted from the responding end. The negotiation response message is configured to indicate m multiplexing relationships. Each multiplexing relationship of the m multiplexing relationships corresponds to at least one media type of the n media types and each multiplexing relationship is configured to indicate that transmission for the at least one media type is performed using a same port number. n is a positive integer, and m is a positive integer smaller than n.

In the embodiment of the invention, the requesting end 40 transmits the negotiation request message carrying information on at least one to-be-negotiated media type to the responding end, and the responding end determines at least one multiplexing relationship for the at least one to-be-negotiated media type. The requesting end 40 receives the negotiation response message indicating the at least one multiplexing relationship transmitted from the responding end. Therefore, negotiation of port multiplexing for media streams of multiple media types is achieved and thus resource overhead of multimedia stream transmission is reduced.

It should be understood that, in the embodiment of the invention, the requesting end and the responding end performing the negotiation may be two terminal devices with multimedia transceiving function which are to be communicated, or devices for controlling media stream transceiving of two multimedia systems (for example, teleconference systems), or two virtual terminals (two ends which are performing network real-time communication WebRTC) which are performing multimedia communication, or the like, which is not limited herein.

Optionally, as an embodiment, the negotiation response message received by the receiving unit 41 includes multiplexing information on the n media types. In a case that an i-th multiplexing relationship of the m multiplexing relationships corresponds to multiple media types of the n media types, multiplexing information on a first media type of the multiple media types includes a first port number of the responding end, and multiplexing information on other media types of the multiple media types except for the first media type includes a port number 0, to indicate that transmission for the multiple media types is performed using the first port number of the responding end, where i is any positive integer smaller than m.

It should be understood that, the i-th multiplexing relationship indicates that multiple media types of the n media types are multiplexed together, and media streams of the multiple media types are transmitted using a same port number. The multiplexing information on the first media type of the multiple media types includes a port number used for transmitting media streams of the multiple media types, i.e., the first port number of the responding end. The other media types are multiplexed on the first port number of the responding end. The port number included in the multiplexing information on the other media types is a pre-agreed value, and the pre-agreed value, when used as a port number, indicates that the other media types described above are multiplexed, and an intermediate device does not allocate transmission recourses for the other media types. The pre-agreed value may be a value which is not in conflict with port numbers actually used. For example, the pre-agreed value may be 0 or 60000, which is not limited herein.

Optionally, as an embodiment, information on each media type of the n media types includes a port number of the requesting end 40 corresponding to each media type determined by the requesting end 40. That is, the requesting end 40 allocates a port number of the requesting end for each media type to be negotiated, and the allocated port numbers may be different from each other to avoid error report due to unfriendliness of the intermediate device because of identical port numbers.

Optionally, as an embodiment, the information on each media type of the information on the n media types further includes at least one of: at least one encode-decode type supported by each media type and a payload type PT value corresponding to each encode-decode type of the at least one encode-decode type, which are determined by the requesting end 40; a bandwidth required for transmitting each media type; interactive connectivity establishment ICE candidate address information on each media type; information indicating that each media type supports real-time transport protocol RTP and real-time transport control protocol RTCP multiplexing; and capability information indicating a capability of the requesting end 40 to transmit and receive a media stream of the at least one encode-decode type.

Optionally, as an embodiment, the capability information includes a maximum reception number and a maximum transmission number of the requesting end 40 for a media stream of one or more encode-decode type of the at least one encode-decode type. It should be understood that the capability information is determined by the requesting end according to the local capability and a service requirement. The information on each media type may include multiple different pieces of capability information, and there is an "or" relation among the different pieces of capability information for selection by the responding end. The maximum reception number and the maximum transmission number may be different, that is, asymmetry negotiation for multimedia streams between the requesting end and the responding end can be achieved by transmission of the capability information.

Optionally, as an embodiment, the multiplexing information on the first media type further includes at least one of: at least one encode-decode type supported by the first media type and a PT value corresponding to each encode-decode type of the at least one encode-decode type, which are determined by the responding end; a sum of bandwidths required by the multiple media types corresponding to the i-th multiplexing relationship; and a maximum reception number and a maximum transmission number of the responding end for a media stream of one or more encode-decode type of the at least one encode-decode type. It should be understood that, in the i-th multiplexing relationship, media streams of the other media types are multiplexed onto the first media type and the port number in the multiplexing information on the other media types is set to 0 or other predefined value. In this case, the intermediate device does not parse the multiplexing information on the other media types or does not allocate transmission recourses for the other media types. Therefore, the multiplexing information on the first media type needs to include bandwidths required by all the media types corresponding to the i-th multiplexing relationship, and thus the intermediate device can allocate enough transmission resources for the multiplexed media streams.

Optionally, as an embodiment, the multiplexing information on the first media type further includes at least one of: ICE candidate address information included in information on the first media type; and information indicating that the first media type supports RTP and RTCP multiplexing.

Optionally, as an embodiment, in a case that a second media type of the n media types is not corresponding to any multiplexing relationship of the m multiplexing relationships, information on the second media type includes: a second port number of the requesting end 40 corresponding to the second media type; and multiplexing information on the second media type includes: a second port number of the responding end corresponding to the second media type, which is determined by the responding end. That is, in a case that the second media type is not multiplexed, the responding end separately allocates a second port number of the responding end for the second media type, and thus media streams of the second media type is transmitted using the second port number of the requesting end 40 and the second port number of the responding end subsequently.

Optionally, as an example, the requesting end 40 further includes a transmission unit, configured to transmit a media stream of the multiple media types corresponding to the i-th multiplexing relationship using the first port number of the requesting end 40 and the first port number of the responding end; and transmit a media stream of the second media type using the second port number of the requesting end 40 and the second port number of the responding end. It should be understood that the first port number of the responding end in the multiplexing information on the first media type is used as a port number for multiplexing and are used by media streams of the multiple media types together. Correspondingly, the first port number of the requesting end 40 included in the information on the first media type may be used by the multiple media types.

In the embodiment of the invention, the requesting end 40 transmits the negotiation request message carrying information on at least one to-be-negotiated media type to the responding end. The responding end determines at least one multiplexing relationship for the at least one to-be-negotiated media type. The requesting end 40 receives the negotiation response message indicating the at least one multiplexing relationship transmitted from the responding end. Therefore, negotiation of port multiplexing for media streams of multiple media types is achieved and thus resource overhead of multimedia stream transmission is reduced. In addition, in the negotiation response message, the port number in the multiplexing information on the multiplexed media types is set to a pre-agreed value, and therefore, unfriendliness of the intermediate device can be avoided. In addition, asymmetry negotiation of multimedia streams can be achieved by interacting the capability information of transmitting and receiving media streams.

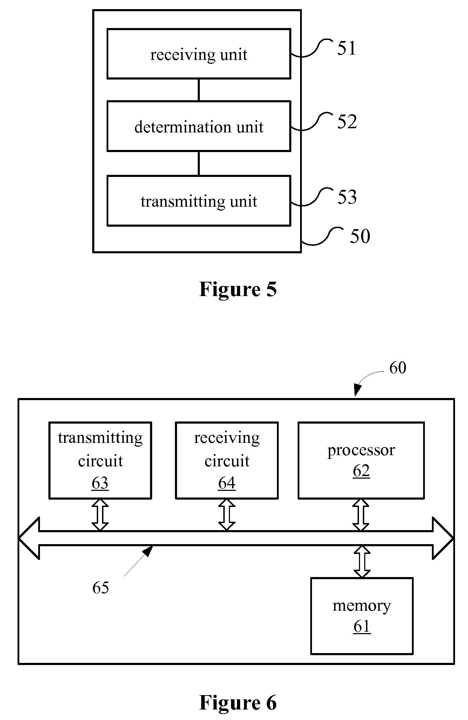

Figure 5 is a schematic block diagram of a responding end according to an embodiment of the invention. The responding end 50 shown in Figure 5 includes a receiving unit 51, a determination unit 52 and a transmitting unit 53.

The receiving unit 51 receives a negotiation request message from a requesting end. The negotiation request message includes information on n media types. The determination unit 52 determines a negotiation response message according to the negotiation request message received by the receiving unit 51. The negotiation response message is configured to indicate m multiplexing relationships. Each multiplexing relationship of the m multiplexing relationships corresponds to at least one media type of the n media types and each multiplexing relationship is configured to indicate that transmission for the at least one media type is performed using a same port number. n is a positive integer, and m is a positive integer smaller than n. The transmitting unit 53 transmits the negotiation response message determined by the determination unit 52 to the requesting end.

In the embodiment of the invention, the requesting end transmits the negotiation request message carrying information on at least one to-be-negotiated media type to the responding end 50, and the responding end 50 determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced.

It should be understood that, in the embodiment of the invention, the requesting end and the responding end 50 performing the negotiation may be two terminal devices with multimedia transceiving function which are to be communicated, or devices for controlling media stream transceiving of two multimedia systems (for example, teleconference systems), or two virtual terminals (two ends which are performing network real-time communication WebRTC) which are performing multimedia communication, or the like, which is not limited herein.

Optionally, as an embodiment, the determination unit 52 is configured to determine m multiplexing relationships for the n media types; and determine multiplexing information on the n media types according to the m multiplexing relationships. That is, after the responding end 50 receives the negotiation request message transmitted from the requesting end, the determination end 50 classifies media streams of the n media types provided in the negotiation request message into m multiplexing relationships according to a local capability of the responding end 50 and an actual service requirement. It should be understood that, the m multiplexing relationships may refer to all the media streams of the n media types, i.e., all-multiplexing, or may refer to some of the media types, i.e., partial multiplexing. Media streams related to each multiplexing relationship of the m multiplexing relationships are multiplexed on a same port number.

Optionally, as an embodiment, in a case that an i-th multiplexing relationship of the m multiplexing relationships corresponds to multiple media types of the n media types, multiplexing information on a first media type of the multiple media types includes a first port number of the responding end 50, and multiplexing information on other media types of the multiple media types except for the first media type includes a port number 0, to indicate that transmission for the multiple media types is performed using the first port number of the responding end 50, where i is any positive integer smaller than m.

It should be understood that, the i-th multiplexing relationship indicates that multiple media types of the n media types are multiplexed together, and media streams of the multiple media types are transmitted using a same port number. The multiplexing information on the first media type of the multiple media types includes a port number used for transmitting media streams of the multiple media types, i.e., the first port number of the responding end. The other media types are multiplexed on the first port number of the responding end. The port number included in the multiplexing information on the other media types is a pre-agreed value, and the pre-agreed value, when used as a port number, indicates that the other media types described above are multiplexed, and an intermediate device does not allocate transmission recourses for the other media types. The pre-agreed value may be a value which is not in conflict with port numbers actually used. For example, the pre-agreed value may be 0 or 60000, which is not limited herein.

Optionally, as an embodiment, information on each media type of the n media types includes a port number of the requesting end corresponding to each media type determined by the requesting end. That is, the requesting end allocates a port number of the requesting end for each media type to be negotiated, and the allocated port numbers may be different from each other to avoid error report due to unfriendliness of the intermediate device because of identical port numbers.

Optionally, as an embodiment, the information on each media type of the information on the n media types further includes at least one of: at least one encode-decode format supported by each media type and a payload type PT value corresponding to each encode format of the at least one encode-decode format, which are determined by the requesting end; a bandwidth required for transmitting each media type; interactive connectivity establishment ICE candidate address information on each media type; information indicating that each media type supports real-time transport protocol RTP and real-time transport control protocol RTCP multiplexing; and capability information indicating a capability of the requesting end to transmit and receive a media stream of the at least one encode-decode type.

Optionally, as an embodiment, the capability information includes a maximum reception number and a maximum transmission number of the requesting end for a media stream of one or more encode-decode type of the at least one encode-decode type. It should be understood that the capability information is determined by the requesting end according to the local capability and a service requirement. The information on each media type may include multiple different pieces of capability information, and there is an "or" relation among the different pieces of capability information for selection by the responding end. The maximum reception number and the maximum transmission number may be different, that is, asymmetry negotiation for multimedia streams between the requesting end and the responding end can be achieved by transmission of the capability information.

Optionally, as an embodiment, the multiplexing information on the first media type further includes at least one of: at least one encode-decode type supported by the first media type and a PT value corresponding to each encode-decode type of the at least one encode-decode type, which are determined by the determination unit 52; a sum of bandwidths required by the multiple media types corresponding to the i-th multiplexing relationship; and a maximum reception number and a maximum transmission number of the requesting end for one or more encode-decode type determined by the determination unit 52 according to the capability information. It should be understood that, in the i-th multiplexing relationship, media streams of the other media types are multiplexed onto the first media type and the port number in the multiplexing information on the other media types is set to 0 or other predefined value. In this case, the intermediate device does not parse the multiplexing information on the other media types or does not allocate transmission recourses for the other media types. Therefore, the multiplexing information on the first media type needs to include bandwidths required by all the media types corresponding to the i-th multiplexing relationship, and thus the intermediate device can allocate enough transmission resources for the multiplexed media streams.

Optionally, as an embodiment, the multiplexing information on the first media type further includes at least one of: ICE candidate address information included in information on the first media type; and information indicating that the first media type supports RTP and RTCP multiplexing.

Optionally, as an embodiment, in a case that a second media type of the n media types is not corresponding to any multiplexing relationship of the m multiplexing relationships, information on the second media type includes: a second port number of the requesting end corresponding to the second media type; and multiplexing information on the second media type includes: a second port number of the responding end 50 corresponding to the second media type, which is determined by the determination unit. That is, in a case that the second media type is not multiplexed, the responding end separately allocates a second port number of the responding end for the second media type, and thus media streams of the second media type is transmitted using the second port number of the requesting end and the second port number of the responding end subsequently.

Optionally, as an example, the responding end 50 further includes a transmission unit, configured to: transmit a media stream of the multiple media types corresponding to the i-th multiplexing relationship using the first port number of the requesting end and the first port number of the responding end 50; and transmit a media stream of the second media type using the second port number of the requesting end and the second port number of the responding end 50. It should be understood that the first port number of the responding end in the multiplexing information on the first media type is used as a port number for multiplexing and are used by media streams of the multiple media types together. Correspondingly, the first port number of the requesting end included in the information on the first media type may be used by the multiple media types.

In the embodiment of the invention, the requesting end transmits the negotiation request message carrying information on at least one to-be-negotiated media type to the responding end 50, and the responding end 50 determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced. In addition, in the negotiation response message, the port number in the multiplexing information on the multiplexed media types is set to a pre-agreed value, and therefore, unfriendliness of the intermediate device can be avoided. In addition, asymmetry negotiation of multimedia streams can be achieved by interacting the capability information of transmitting and receiving media streams.

Figure 6 is a schematic block diagram of a requesting end according to another embodiment of the invention. The requesting end 60 shown in Figure 6 includes a memory 61, a processor 62, a transmitting circuit 63 and a receiving circuit 64.

The memory 62 is configured to store instructions which cause the processor 61 to perform the following operations: transmitting, by the transmitting circuit 63, a negotiation request message to a responding end, where the negotiation request message includes information on n media types; and receiving, by the receiving circuit 64, a negotiation response message transmitted from the responding end, where the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, where n is a positive integer, and m is a positive integer smaller than n.

In the embodiment of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced.

The processor 62 controls the operation of the requesting end 60. The processor 62 may also be referred to as a CPU (Central Processing Unit, central processing unit). The memory 61 may include a read only memory and a random access memory, and may provide instructions and data to the processor 62. Apart of the memory 61 may further include a non-volatile random access memory (NVRAM). The various components of the requesting end 60 are coupled together by a bus system 65. In addition to a data bus, the bus system 65 may further include a power bus, a control bus and a state signal bus. For the sake of clarity, various buses are illustrated as the bus system 65 in the drawing.

The methods disclosed by the above embodiments of the invention may be applied to the processor 62 or may be implemented by the processor 62. The processor 62 may be an integrated circuit chip and have an ability of signal processing. In implementation, various steps of the above methods may be executed by instructions in a form of software or an integrated logic circuit in a form of hardware in the processor 62. The above processor 62 may be a general purpose processor, a digital signal processor (DSP), an application specific integrated circuit (ASIC), a field programmable gate array (FPGA), or other programmable logic device, a discrete gate or a transistor logic device, a discrete hardware component, which can implement or execute the methods, steps and logic blocks disclosed in the embodiments of the invention. The general purpose processor may be a micro-processor or any other regular processor. The steps of the methods disclosed in the embodiment of the invention may be implemented by hardware of a decode processor or by combination of hardware and software modules in the decode processor. The software modules may be in a mature storage medium in the art, such as a random access memory, a flash memory, a read only memory, a programmable read only memory, an electrically erasable programmable memory and a register. The storage medium is located in the memory 61, and the processor 62 reads information from the memory 61 to implement the steps of the above methods in conjunction with its hardware.

Optionally, as an embodiment, the negotiation response message includes multiplexing information on the n media types. In a case that an i-th multiplexing relationship of the m multiplexing relationships corresponds to multiple media types of the n media types, multiplexing information on a first media type of the multiple media types includes a first port number of the responding end, and multiplexing information on other media types of the multiple media types except for the first media type includes a port number 0, to indicate that transmission for the multiple media types is performed using the first port number of the responding end, where i is any positive integer smaller than m.

It should be understood that, the i-th multiplexing relationship indicates that multiple media types of the n media types are multiplexed together, and media streams of the multiple media types are transmitted using a same port number. The multiplexing information on the first media type of the multiple media types includes a port number used for transmitting media streams of the multiple media types, i.e., the first port number of the responding end. The other media types are multiplexed on the first port number of the responding end. The port number included in the multiplexing information on the other media types is a pre-agreed value, and the pre-agreed value, when used as a port number, indicates that the other media types described above are multiplexed, and an intermediate device does not allocate transmission recourses for the other media types. The pre-agreed value may be a value which is not in conflict with port numbers actually used. For example, the pre-agreed value may be 0 or 60000, which is not limited herein.

Optionally, as an embodiment, information on each media type of the n media types includes a port number of the requesting end corresponding to each media type determined by the requesting end. That is, the requesting end allocates a port number of the requesting end for each media type to be negotiated, and the allocated port numbers may be different from each other to avoid error report due to unfriendliness of the intermediate device because of identical port numbers.

Optionally, as an embodiment, the capability information includes a maximum reception number and a maximum transmission number of the requesting end for a media stream of one or more encode-decode type of the at least one encode-decode type. It should be understood that the capability information is determined by the requesting end according to the local capability and a service requirement. The information on each media type may include multiple different pieces of capability information, and there is an "or" relation among the different pieces of capability information for selection by the responding end. The maximum reception number and the maximum transmission number may be different, that is, asymmetry negotiation for multimedia streams between the requesting end and the responding end can be achieved by transmission of the capability information.

Optionally, as an embodiment, the multiplexing information on the first media type further includes at least one of: at least one encode-decode type supported by the first media type and a PT value corresponding to each encode-decode type of the at least one encode-decode type, which are determined by the responding end; a sum of bandwidths required by the multiple media types corresponding to the i-th multiplexing relationship; and a maximum reception number and a maximum transmission number of the responding end for a media stream of one or more encode-decode type of the at least one encode-decode type. It should be understood that, in the i-th multiplexing relationship, media streams of the other media types are multiplexed onto the first media type and the port number in the multiplexing information on the other media types is set to 0 or other predefined value. In this case, the intermediate device does not parse the multiplexing information on the other media types or does not allocate transmission recourses for the other media types. Therefore, the multiplexing information on the first media type needs to include bandwidths required by all the media types corresponding to the i-th multiplexing relationship, and thus the intermediate device can allocate enough transmission resources for the multiplexed media streams.

In the embodiment of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced. In addition, in the negotiation response message, the port number in the multiplexing information on the multiplexed media types is set to a pre-agreed value, and therefore, unfriendliness of the intermediate device can be avoided. In addition, asymmetry negotiation of multimedia streams can be achieved by interacting the capability information of transmitting and receiving media streams.

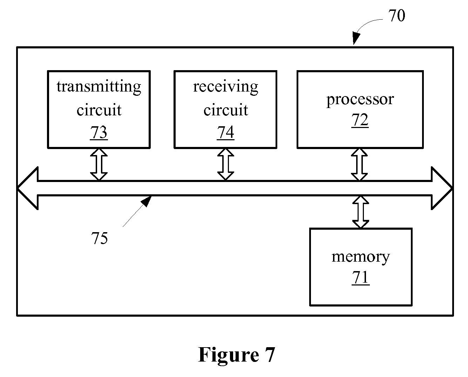

Figure 7 is a schematic block diagram of a responding end according to another embodiment of the invention. The responding end 70 shown in Figure 7 includes a memory 71, a processor 72, a transmitting circuit 73 and a receiving circuit 74.

The receiving circuit 74 is configured to receive a negotiation request message transmitted from a requesting end. The negotiation request message comprises information on n media types. The memory 71 stores instructions to cause the processor 72 to determine a negotiation response message according to the negotiation request message. The negotiation response message is configured to indicate m multiplexing relationships. Each multiplexing relationship of the m multiplexing relationships corresponds to at least one media type of the n media types and each multiplexing relationship is configured to indicate that transmission for the at least one media type is performed using a same port number. n is a positive integer, and m is a positive integer smaller than n. The transmitting circuit 73 is configured to transmit the negotiation response message to the requesting end.

In the embodiments of the invention, the requesting end transmits the negotiation request message carrying information on at least one to-be-negotiated media type to the responding end, and the responding end determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced.

The processor 72 controls the operation of the responding end 70. The processor 72 may also be referred to as a CPU (Central Processing Unit, central processing unit). The memory 71 may include a read only memory and a random access memory, and may provide instructions and data to the processor 72. Apart of the memory 71 may further include a non-volatile random access memory (NVRAM). The various components of the responding end 70 are coupled together by a bus system 75. In addition to a data bus, the bus system 75 may further include a power bus, a control bus and a state signal bus. For the sake of clarity, various buses are illustrated as the bus system 75 in the drawing.

The methods disclosed by the above embodiments of the invention may be applied to the processor 72 or may be implemented by the processor 72. The processor 72 may be an integrated circuit chip and have an ability of signal processing. In implementation, various steps of the above methods may be executed by instructions in a form of software or an integrated logic circuit in a form of hardware in the processor 72. The above processor 72 may be a general purpose processor, a digital signal processor (DSP), an application specific integrated circuit (ASIC), a field programmable gate array (FPGA), or other programmable logic device, a discrete gate or a transistor logic device, a discrete hardware component, which can implement or execute the methods, steps and logic blocks disclosed in the embodiments of the invention. The general purpose processor may be a micro-processor or any other regular processor. The steps of the methods disclosed in the embodiment of the invention may be implemented by hardware of a decode processor or by combination of hardware and software modules in the decode processor. The software modules may be in a mature storage medium in the art, such as a random access memory, a flash memory, a read only memory, a programmable read only memory, an electrically erasable programmable memory and a register. The storage medium is located in the memory 71, and the processor 72 reads information from the memory 71 to implement the steps of the above methods in conjunction with its hardware.

Optionally, as an example, the processor 72 is configured to determine m multiplexing relationships for the n media types; and determine multiplexing information on the n media types according to the m multiplexing relationships. That is, upon reception of the negotiation request message transmitted from the requesting end, the responding end 70 classifies media streams of the n media types provided in the negotiation request message into m multiplexing relationships according to a local capability of the responding end 70 and an actual service requirement. It should be understood that, the m multiplexing relationships may refer to all the media streams of the n media types, i.e., all-multiplexing, or may refer to some of the media types, i.e., partial multiplexing. Media streams related to each multiplexing relationship of the m multiplexing relationships are multiplexed on a same port number.

Optionally, as an embodiment, in a case that an i-th multiplexing relationship of the m multiplexing relationships corresponds to multiple media types of the n media types, multiplexing information on a first media type of the multiple media types includes a first port number of the responding end 70, and multiplexing information on other media types of the multiple media types except for the first media type includes a port number 0, to indicate that transmission for the multiple media types is performed using the first port number of the responding end 70, where i is any positive integer smaller than m.

It should be understood that, the i-th multiplexing relationship indicates that multiple media types of the n media types are multiplexed together, and media streams of the multiple media types are transmitted using a same port number. The multiplexing information on the first media type of the multiple media types includes a port number used for transmitting media streams of the multiple media types, i.e., the first port number of the responding end 70. The other media types are multiplexed on the first port number of the responding end 70. The port number included in the multiplexing information on the other media types is a pre-agreed value, and the pre-agreed value, when used as a port number, indicates that the other media types described above are multiplexed, and an intermediate device does not allocate transmission recourses for the other media types. The pre-agreed value may be a value which is not in conflict with port numbers actually used. For example, the pre-agreed value may be 0 or 60000, which is not limited herein.

Optionally, as an embodiment, information on each media type of the n media types includes a port number of the requesting end corresponding to each media type determined by the requesting end. That is, the requesting end allocates a port number of the requesting end for each media type to be negotiated, and the allocated port numbers may be different from each other to avoid error report due to unfriendliness of the intermediate device because of identical port numbers.

Optionally, as an embodiment, the information on each media type of the information on the n media types further includes at least one of: at least one encode-decode type supported by each media type and a payload type PT value corresponding to each encode format of the at least one encode-decode type, which are determined by the requesting end; a bandwidth required for transmitting each media type; interactive connectivity establishment ICE candidate address information on each media type; information indicating that each media type supports real-time transport protocol RTP and real-time transport control protocol RTCP multiplexing; and capability information indicating a capability of the requesting end to transmit and receive a media stream of the at least one encode-decode type.

Optionally, as an embodiment, the capability information includes a maximum reception number and a maximum transmission number of the requesting end for a media stream of one or more encode-decode type of the at least one encode-decode type. It should be understood that the capability information is determined by the requesting end according to the local capability and a service requirement. The information on each media type may include multiple different pieces of capability information, and there is an "or" relation among the different pieces of capability information for selection by the responding end 70. The maximum reception number and the maximum transmission number may be different, that is, asymmetry negotiation for multimedia streams between the requesting end and the responding end 70 can be achieved by transmission of the capability information.

Optionally, as an embodiment, the multiplexing information on the first media type further includes at least one of: at least one encode-decode type supported by the first media type and a PT value corresponding to each encode-decode type of the at least one encode-decode type, which are determined by the responding end 70; a sum of bandwidths required by the multiple media types corresponding to the i-th multiplexing relationship; and a maximum reception number and a maximum transmission number of the responding end 70 for a media stream of one or more encode-decode type of the at least one encode-decode type. It should be understood that, in the i-th multiplexing relationship, media streams of the other media types are multiplexed onto the first media type and the port number in the multiplexing information on the other media types is set to 0 or other predefined value. In this case, the intermediate device does not parse the multiplexing information on the other media types or does not allocate transmission recourses for the other media types. Therefore, the multiplexing information on the first media type needs to include bandwidths required by all the media types corresponding to the i-th multiplexing relationship, and thus the intermediate device can allocate enough transmission resources for the multiplexed media streams.

In the embodiment of the invention, the requesting end transmits the negotiation request message carrying information on at least one to-be-negotiated media type to the responding end 70, and the responding end 70 determines at least one multiplexing relationship for the at least one to-be-negotiated media type and transmits the negotiation response message indicating the at least one multiplexing relationship to the requesting end. Therefore, negotiation of port multiplexing for media streams of multiple media types is achieved and thus resource overhead of multimedia stream transmission is reduced. In addition, in the negotiation response message, the port number in the multiplexing information on the multiplexed media types is set to a pre-agreed value, and therefore, unfriendliness of the intermediate device can be avoided. In addition, asymmetry negotiation of multimedia streams can be achieved by interacting the capability information of transmitting and receiving media streams.

Those skilled in the art can understand that the various units and method steps that are described in conjunction with the embodiments disclosed in the disclosure are able to be implemented in electronic hardware, computer software or a combination of electronic hardware and computer software. The components and the steps of the various embodiments have been described generally according to functions in the above description, to describe the interchangeability between the hardware and the software clearly. Whether these functions are implemented in hardware or software is determined by specific application of the technical solution and the design constraint condition. For each specific application, the described functions can be implemented with different method by those skilled in the art, and this implementation should not be considered as beyond the scope of the present invention.

The method or steps that are described in conjunction with the embodiment disclosed herein can be implemented in hardware, a software program performed by a processor or the combination of the hardware and the software program. The software program may be in a random access memory (RAM), a memory, a read-only memory (ROM), an electrically programmable ROM, an electrically erasable programmable ROM, a register, a hard disk, a movable disc, a CD-ROM, or any other storage medium that is well-known in the art.

Although the invention has been described in detail with reference to drawings in conjunction with preferred embodiments, the invention is not limited thereto. Various equivalent modifications or substitutes to the embodiments of the invention can be made by those skilled in the art without departing from the spirit and substance of the invention, and all these modifications and substitutes should be within the scope of the present invention.

## Claims

1. A method for media multiplexing negotiation, comprising:
transmitting a negotiation request message to a responding end, wherein the negotiation request message comprises information on n media types; and
receiving a negotiation response message transmitted from the responding end, wherein the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, wherein n is a positive integer, and m is a positive integer smaller than n.

2. The method according to claim 1, wherein the negotiation response message comprises multiplexing information on the n media types, wherein in a case that an i-th multiplexing relationship of the m multiplexing relationships corresponds to a plurality of media types of the n media types, multiplexing information on a first media type of the plurality of media types comprises a first port number of the responding end, and multiplexing information on other media types of the plurality of media types except for the first media type comprises a port number 0, to indicate that transmission for the plurality of media types is performed using the first port number of the responding end, wherein i is any positive integer smaller than m.

3. The method according to claim 2, wherein information on each media type of the n media types comprises: a port number of the requesting end corresponding to the each media type, which is determined by the requesting end.

4. The method according to claim 3, wherein the information on each media type of the information on the n media types further comprises at least one of:
at least one encode-decode type supported by the each media type and a payload type PT value corresponding to each encode-decode type of the at least one encode-decode type, which are determined by the requesting end;
a bandwidth required for transmitting the each media type;
interactive connectivity establishment ICE candidate address information on the each media type;
information indicating that the each media type supports real-time transport protocol RTP and real-time transport control protocol RTCP multiplexing; and
capability information indicating a capability of the requesting end to transmit and receive a media stream of the at least one encode-decode type.

5. The method according to claim 4, wherein the capability information comprises a maximum reception number and a maximum transmission number of the requesting end for a media stream of one or more encode-decode type of the at least one encode-decode type.

6. The method according to claim 2, wherein the multiplexing information on the first media type further comprises at least one of:
at least one encode-decode type supported by the first media type and a PT value corresponding to each encode-decode type of the at least one encode-decode type, which are determined by the responding end;
a sum of bandwidths required by the plurality of media types corresponding to the i-th multiplexing relationship; and
a maximum reception number and a maximum transmission number of the responding end for a media stream of one or more encode-decode type of the at least one encode-decode type.

7. The method according to claim 6, wherein the multiplexing information on the first media type further comprises at least one of:
ICE candidate address information comprised in information on the first media type; and
information indicating that the first media type supports RTP and RTCP multiplexing.

8. The method according to claim 2, wherein in a case that a second media type of the n media types is not corresponding to any multiplexing relationship of the m multiplexing relationships,
information on the second media type comprises: a second port number of the requesting end corresponding to the second media type; and
multiplexing information on the second media type comprises: a second port number of the responding end corresponding to the second media type, which is determined by the responding end.

9. The method according to any one of claims 2 to 8, wherein, after receiving the negotiation response message transmitted from the responding end, the method further comprises:
transmitting a media stream of the plurality of media types corresponding to the i-th multiplexing relationship using a first port number of the requesting end and the first port number of the responding end; and
transmitting a media stream of the second media type using a second port number of the requesting end and a second port number of the responding end.

10. The method according to any one of claims 1 to 9, wherein the negotiation request message further comprises session layer attribute information indicating that the requesting end supports media multiplexing.

11. A method for media multiplexing negotiation, comprising:
receiving a negotiation request message transmitted from a requesting end, wherein the negotiation request message comprises information on n media types;
determining a negotiation response message according to the negotiation request message, wherein the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, wherein n is a positive integer, and m is a positive integer smaller than n; and
transmitting the negotiation response message to the requesting end.

12. The method according to claim 11, wherein in a case that an i-th multiplexing relationship of the m multiplexing relationships corresponds to a plurality of media types of the n media types, multiplexing information on a first media type of the plurality of media types comprises a first port number of the responding end, and multiplexing information on other media types of the plurality of media types except for the first media type comprises a port number 0, to indicate that transmission for the plurality of media types is performed using the first port number of the responding end, wherein i is any positive integer smaller than m.

13. The method according to claim 12, wherein information on each media type of the n media types comprises: a port number of the requesting end corresponding to the each media type, which is determined by the requesting end.

14. The method according to claim 13, wherein the information on each media type of the information on the n media types comprises at least one of:
at least one encode-decode type supported by the each media type and a payload type PT value corresponding to each encode format of the at least one encode-decode type, which are determined by the requesting end;
a bandwidth required for transmitting the each media type;
interactive connectivity establishment ICE candidate address information on the each media type;
information indicating that the each media type supports real-time transport protocol RTP and real-time transport control protocol RTCP multiplexing; and
capability information indicating a capability of the requesting end to transmit and receive a media stream of the at least one encode-decode type.

15. The method according to claim 14, wherein the capability information comprises a maximum reception number and a maximum transmission number of the requesting end for a media stream of one or more encode-decode type of the at least one encode-decode type.

16. The method according to claim 12, wherein the multiplexing information on the first media type further comprises at least one of:
at least one encode-decode type supported by the first media type and a PT value corresponding to each encode-decode type of the at least one encode-decode type, which are determined by the responding end;
a sum of bandwidths required by the plurality of media types corresponding to the i-th multiplexing relationship; and
a maximum reception number and a maximum transmission number of the responding end for a media stream of one or more encode-decode type of the at least one encode-decode type.

17. The method according to claim 16, wherein the multiplexing information on the first media type further comprises at least one of:
ICE candidate address information comprised in information on the first media type; and
information indicating that the first media type supports RTP and RTCP multiplexing.

18. The method according to claim 12, wherein in a case that a second media type of the n media types is not corresponding to any multiplexing relationship of the m multiplexing relationships,
information on the second media type comprises: a second port number of the requesting end corresponding to the second media type; and
multiplexing information on the second media type comprises: a second port number of the responding end corresponding to the second media type, which is determined by the responding end.

19. The method according to any one of claims 12 to 18, wherein, after receiving the negotiation response message transmitted from the responding end, the method further comprises:
transmitting a media stream of the plurality of media types corresponding to the i-th multiplexing relationship using a first port number of the requesting end and the first port number of the responding end; and
transmitting a media stream of the second media type using a second port number of the requesting end and a second port number of the responding end.

20. The method according to any one of claims 11 to 19, wherein the negotiation request message further comprises session layer attribute information indicating that the requesting end supports media multiplexing.

21. A requesting end, comprising:
a transmitting unit, configured to transmit a negotiation request message to a responding end, wherein the negotiation request message comprises information on n media types; and
a receiving unit, configured to receive a negotiation response message transmitted from the responding end, wherein the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, wherein n is a positive integer, and m is a positive integer smaller than n.

22. The requesting end according to claim 21, wherein the negotiation response message received by the receiving unit comprises multiplexing information on the n media types, wherein in a case that an i-th multiplexing relationship of the m multiplexing relationships corresponds to a plurality of media types of the n media types, multiplexing information on a first media type of the plurality of media types comprises a first port number of the responding end, and multiplexing information on other media types of the plurality of media types except for the first media type comprises a port number 0, to indicate that transmission for the plurality of media types is performed using the first port number of the responding end, wherein i is any positive integer smaller than m.

23. The requesting end according to claim 22, wherein information on each media type of the n media types comprises: a port number of the requesting end corresponding to the each media type, which is determined by the requesting end.

24. The requesting end according to claim 23, wherein the information on each media type of the information on the n media types further comprises at least one of:
at least one encode-decode type supported by the each media type and a payload type PT value corresponding to each encode-decode type of the at least one encode-decode type, which are determined by the requesting end;
a bandwidth required for transmitting the each media type;
interactive connectivity establishment ICE candidate address information on the each media type;
information indicating that the each media type supports real-time transport protocol RTP and real-time transport control protocol RTCP multiplexing; and
capability information indicating a capability of the requesting end to transmit and receive a media stream of the at least one encode-decode type.

25. The requesting end according to claim 24, wherein the capability information comprises a maximum reception number and a maximum transmission number of the requesting end for a media stream of one or more encode-decode type of the at least one encode-decode type.

26. The requesting end according to claim 22, wherein the multiplexing information on the first media type further comprises at least one of:
at least one encode-decode type supported by the first media type and a PT value corresponding to each encode-decode type of the at least one encode-decode type, which are determined by the responding end;
a sum of bandwidths required by the plurality of media types corresponding to the i-th multiplexing relationship; and
a maximum reception number and a maximum transmission number of the responding end for a media stream of one or more encode-decode type of the at least one encode-decode type.

27. The requesting end according to claim 26, wherein the multiplexing information on the first media type further comprises at least one of:
ICE candidate address information comprised in information on the first media type; and
information indicating that the first media type supports RTP and RTCP multiplexing.

28. The requesting end according to claim 22, wherein in a case that a second media type of the n media types is not corresponding to any multiplexing relationship of the m multiplexing relationships,
information on the second media type comprises: a second port number of the requesting end corresponding to the second media type; and
multiplexing information on the second media type comprises: a second port number of the responding end corresponding to the second media type, which is determined by the responding end.

29. The requesting end according to any one of claims 22 to 28, further comprising a transmission unit, configured to:
transmit a media stream of the plurality of media types corresponding to the i-th multiplexing relationship using a first port number of the requesting end and the first port number of the responding end; and
transmit a media stream of the second media type using a second port number of the requesting end and a second port number of the responding end.

30. The requesting end according to any one of claims 21 to 29, wherein the negotiation request message transmitted from the transmitting unit further comprises session layer attribute information indicating that the requesting end supports media multiplexing.

31. A responding end, comprising:
a receiving unit, configured to receive a negotiation request message transmitted from a requesting end, wherein the negotiation request message comprises information on n media types;
a determination unit, configured to determine a negotiation response message according to the negotiation request message received by the receiving unit, wherein the negotiation response message is configured to indicate m multiplexing relationships, each multiplexing relationship of the m multiplexing relationships corresponds to at least one media type of the n media types and each multiplexing relationship is configured to indicate that transmission for the at least one media type is performed using a same port number, wherein n is a positive integer, and m is a positive integer smaller than n; and
a transmitting unit, configured to transmit the negotiation response message determined by the determination unit to the requesting end.

32. The responding end according to claim 31, wherein in a case that an i-th multiplexing relationship of the m multiplexing relationships corresponds to a plurality of media types of the n media types, multiplexing information on a first media type of the plurality of media types comprises a first port number of the responding end, and multiplexing information on other media types of the plurality of media types except for the first media type comprises a port number 0, to indicate that transmission for the plurality of media types is performed using the first port number of the responding end, wherein i is any positive integer smaller than m.

33. The responding end according to claim 32, wherein information on each media type of the n media types comprises: a port number of the requesting end corresponding to the each media type, which is determined by the requesting end.

34. The responding end according to claim 33, wherein the information on each media type of the information on the n media types further comprises at least one of:
at least one encode-decode type supported by the each media type and a payload type PT value corresponding to each encode format of the at least one encode-decode type, which are determined by the requesting end;
a bandwidth required for transmitting the each media type;
interactive connectivity establishment ICE candidate address information on the each media type;
information indicating that the each media type supports real-time transport protocol RTP and real-time transport control protocol RTCP multiplexing; and
capability information indicating a capability of the requesting end to transmit and receive a media stream of the at least one encode-decode type.

35. The responding end according to claim 34, wherein the capability information comprises a maximum reception number and a maximum transmission number of the requesting end for a media stream of one or more encode-decode type of the at least one encode-decode type.

36. The responding end according to claim 32, wherein the multiplexing information on the first media type further comprises at least one of:
at least one encode-decode type supported by the first media type and a PT value corresponding to each encode-decode type of the at least one encode-decode type, which are determined by the determination unit;
a sum of bandwidths required by the plurality of media types corresponding to the i-th multiplexing relationship; and
a maximum reception number and a maximum transmission number of the requesting end for one or more encode-decode type determined by the determination unit according to the capability information.

37. The responding end according to claim 36, wherein the multiplexing information on the first media type further comprises at least one of:
ICE candidate address information comprised in information on the first media type; and
information indicating that the first media type supports RTP and RTCP multiplexing.

38. The responding end according to claim 32, wherein in a case that a second media type of the n media types is not corresponding to any multiplexing relationship of the m multiplexing relationships,
information on the second media type comprises: a second port number of the requesting end corresponding to the second media type; and
multiplexing information on the second media type comprises: a second port number of the responding end corresponding to the second media type, which is determined by the determination unit.

39. The responding end according to any one of claims 32 to 38, further comprising a transmission unit, configured to:
transmit a media stream of the plurality of media types corresponding to the i-th multiplexing relationship using a first port number of the requesting end and the first port number of the responding end; and
transmit a media stream of the second media type using a second port number of the requesting end and a second port number of the responding end.

40. The responding end according to any one of claims 31 to 39, wherein the negotiation request message further comprises session layer attribute information indicating that the requesting end supports media multiplexing.
